# EUROPÄISCHE PATENTANMELDUNG

(11) **EP 2 079 045 A1**
(43) Veröffentlichungstag der Anmeldung: **15.07.2009**
(21) Anmeldenummer: 09000216.3
(22) Anmeldetag: 09.01.2009
(51) Int. Cl.: G06Q 10/00

(54) **Verfahren zur Ermittlung einer Vergleichbarkeit von Dienstleistungsangeboten oder Produkten**

(30) Priorität: 09.01.2008 DE 102008003700
(71) Anmelder: Laurini, Frank, 40547 Düsseldorf (DE)
(72) Erfinder: Laurini, Frank, 40547 Düsseldorf (DE)
(74) Vertreter: Stenger, Watzke & Ring

(57) **Zusammenfassung**

Die vorliegende Erfindung betrifft ein Verfahren zur Ermittlung einer Vergleichbarkeit von Dienstleistungsangeboten bzw. Produkten, dem die Aufgabe zugrunde liegt, ein Verfahren zur Ermittlung einer Vergleichbarkeit von Dienstleistungen bzw. Produkten anzugeben, welches eine genauere und detailliertere Bewertung ermöglicht.

Als Lösung hierfür wird mit der Erfindung ein Verfahren zur Ermittlung einer Vergleichbarkeit von Dienstleistungsangeboten bzw. Produkten vorgeschlagen, wobei einer Dienstleistung bzw. einem Produkt eine individualisierende Identifikation zugewiesen wird, ein Qualitätsmerkmal für die Dienstleistung sowie ein Bewertungsmaßstab hierfür festgelegt werden, von Nutzern der Dienstleistung bzw. des Produktes bewertungsmaßstabsentsprechende Bewertungen für das Qualitätsmerkmal abgegeben und gesammelt werden, die Bewertungen verarbeitet werden und ein Ergebnis abrufbar gespeichert wird.

## Beschreibung

Die vorliegende Erfindung betrifft ein Verfahren zur Ermittlung einer Vergleichbarkeit von Dienstleistungsangeboten bzw. Produkten.

Bezüglich der Qualität von Dienstleistungen bzw. Produkten ist ein potentieller Nutzer beziehungsweise Kunde in der Regel auf persönliche Erfahrungswerte sowie subjektive Einzelbewertungen von persönlich bekannten Dritten angewiesen. Darüber hinaus kann die Dienstleistung systematischen Schwankungen unterliegen, die auf unbekannte Parameter beziehungsweise Randbedingungen zurückzuführen sind. Derartige Dienstleistungen können beispielsweise Versandhandel, Transport, Kommunikationskanäle wie Internetzugang, Telefon oder dergleichen aber auch die Bereitstellung von Informationen wie Musik- oder Videodaten sein. Auch kann die Dienstleistung die Nutzung einer Einrichtung beispielsweise eines Parkplatzes, eines Sitzplatzes oder dergleichen umfassen beziehungsweise betreffen.

Bei Verkehrsmitteln, Veranstaltungen, insbesondere bei kostenpflichtigen Veranstaltungen sind oftmals Plätze und/oder Platzbereiche personenbezogen vergeben, beispielsweise bei Sportveranstaltungen, Konzerten und dergleichen. Die Plätze und/oder Platzbereiche sind dabei oftmals in Kategorien eingeteilt, die eine entsprechende Qualität des Platzes und/oder Platzbereichs repräsentieren sollen und entsprechend der Kategorie hinsichtlich ihres Preises bestimmt sind. Die Einteilung der Plätze und/oder Platzbereiche in Kategorien stellt jedoch nur ein sehr grobes Merkmal für eine Qualität dar, so dass es wünschenswert ist, zusätzliche Merkmale in eine Qualitätsbewertung eines Platzes und/oder Platzbereichs einfließen zu lassen. Insbesondere Sicht- und Akustikbehinderungen werden durch die Kategorieeinteilung der Plätze und/oder Platzbereiche nicht hinreichend erfaßt. Diese stellen jedoch für die Nutzer des Platzes und/oder Platzbereichs ein wichtiges Entscheidungsmerkmal bezüglich der Auswahl eines bestimmten Platzes und/oder Platzbereichs dar. Es besteht deshalb Bedarf, zusätzliche Informationen in die Ermittlung einer Qualität eines Platzes und oder Platzbereichs einfließen zu lassen. Ein Platz kann beispielsweise ein Sitz- und/oder Stehplatz sein. Ein Platzbereich kann mehrere Sitz- und/oder Stehplätze umfassen. Er kann durch eine Markierung gekennzeichnet sein, die beispielsweise auf einem Boden angebracht ist. Natürlich kann auch eine Umzäumung oder dergleichen vorgesehen sein, um den Platzbereich zu kennzeichnen.

Der Erfindung liegt deshalb die **Aufgabe** zugrunde, ein Verfahren zur Ermittlung einer Vergleichbarkeit von Dienstleistungen bzw. Produkten anzugeben, welches eine genauere und detailliertere Bewertung ermöglicht.

Als **Lösung** wird mit der Erfindung ein Verfahren zur Ermittlung einer Vergleichbarkeit von Dienstleistungsangeboten bzw. Produkten vorgeschlagen, wobei einer Dienstleistung oder einem Produkt eine individualisierende Identifikation zugewiesen wird, ein Qualitätsmerkmal für die Dienstleistung oder für das Produkt sowie ein Bewertungsmaßstab hierfür festgelegt werden, von Nutzern der Dienstleistung bzw. des Produktes bewertungsmaßstabsentsprechende Bewertungen für das Qualitätsmerkmal abgegeben und gesammelt werden, die Bewertungen verarbeitet werden und ein Ergebnis abrufbar gespeichert wird.

Erstmals ist es somit möglich, Dienstleistungen wie insbesondere Plätze und Platzbereiche auch innerhalb einer Kategorie einer genauen Bewertung zu unterziehen, so dass für den Nutzer eine verbesserte Entscheidungsmöglichkeit bereitgestellt wird, für welche Dienstleistung, insbesondere Platz beziehungsweise Platzbereich er sich entscheidet. Es wird ferner vorgeschlagen, dass als Dienstleistung ein Platz und/oder ein Platzbereich eines insbesondere öffentlichen Veranstaltungsortes verwendet wird. Von Vorteil ist dies insbesondere bei Buchungsmöglichkeiten über elektronische Medien, bei denen einzelne identifizierbare Sitzplätze gezielt buchbar sind. Die Daten können beispielsweise auf einem Server über ein Kommunikationsnetzwerk abrufbar bereitgestellt werden. Das Kommunikationsnetzwerk kann beispielsweise ein Intranet, das Internet oder ein vergleichbares Netzwerk wie GSM oder dergleichen sein. Natürlich besteht die Möglichkeit, dass die Daten auch mittels eines Ausdrucks bereitgestellt werden, der in regelmäßigen Zeitabständen neu aufgelegt wird. Ein Sitzplatz ist vorzugsweise ein einzelner Sitzplatz, es kann jedoch auch eine Gruppe von vorgebbaren Sitzplätzen vorgesehen sein. Diesem oder der Gruppe wird eine eindeutige, das heißt individualisierende Identifikation zugewiesen, so dass Bewertungen platz- oder platzbereichsbezogen gespeichert werden können. Die Identifikation kann durch eine fortlaufende Numerierung oder auch durch eine alphanumerische Zeichenkette gebildet sein. Die Identifikation kann beispielsweise eine Identifikation des Veranstaltungsortes umfassen. Daneben kann vorgesehen sein, dass anstelle oder zusätzlich entsprechend Zutrittsbereiche mit dem Verfahren bewertet werden. Qualitätsmerkmale können beispielsweise die Sicht, die Akustik, Fluchtwege, Nähe zu sanitären Einrichtungen, Getränke- sowie Essensständen, Garderoben und dergleichen sein. Für das Qualitätsmerkmal wird ein Bewertungsmaßstab festgelegt, der beispielsweise durch ein Punkteranking oder dergleichen gebildet sein kann. So kann vorgesehen sein, dass 0 Punkte für eine sehr schlechte Bewertung und 10 Punkte für eine sehr gute Bewertung vergeben werden können. Ein Nutzer, der den Platz beziehungsweise Platzbereich genutzt hat, gibt nach der Nutzung eine bewertungsmaßstabsentsprechende Bewertung für die jeweiligen Qualitätsmerkmale ab. Dies kann beispielsweise dadurch erfolgen, dass mittels einer Eingabetastatur eine entsprechende Bewertung in ein Datenverarbeitungssystem eingegeben wird. Mittels des Datenverarbeitungssystems, welches beispielsweise aus einem oder mehreren Rechnern bestehen kann, werden die Bewertungen zunächst gesammelt, beispielsweise als Einzelbewertungen gespeichert. Gemäß eines vorgebbaren Algorhythmus werden sie verarbeitet und ein Ergebnis abrufbar gespeichert. Dabei kann vorgesehen sein, dass das Abrufen der Bewertung von Plätzen und/oder Platzbereichen kostenlos oder auch gegen Zahlung einer Gebühr erfolgt. Das Abrufen kann beispielsweise mittels eines Terminals, eines Rechners, eines Mobilfunkendgeräts oder dergleichen über ein Kommunikationsnetzwerk wie dem Internet erfolgen. Ferner kann eine Sprachansage vorgesehen sein, die auf Abruf automatisch aktiviert wird. Diese Ausgestaltung ist insbesondere bei Abruf über Telefon oder dergleichen von Vorteil.

Gemäß einer Weiterbildung wird vorgeschlagen, dass die Bewertung veranstaltungsortspezifisch gespeichert wird. Auf einfache Weise können deshalb ermittelte Qualitäten von Plätzen und/oder Platzbereichen für einen Veranstaltungsort gemeinsam aufgerufen werden. Dem Nutzer wird die Möglichkeit eröffnet, den Platz beziehungsweise Platzbereich bezüglich seiner gewünschten Qualität auszuwählen. Der Bedienungskomfort kann weiter verbessert werden.

Darüber hinaus wird vorgeschlagen, dass die Bewertung kategoriebezogen gespeichert wird. So können vorteilhaft Bewertungen von Plätzen und/oder Platzbereichen der gleichen Kategorie gemeinsam aufgerufen werden, um beispielsweise innerhalb der Kategorie den benutzerspezifisch günstigsten Sitzplatz auswählen zu können.

Weiterhin können mehrere für den Platz und/oder Platzbereich abgegebene Bewertungen abgespeichert werden. So kann der interessierte Nutzer nachvollziehen, wie viele Bewertungen für den Platz beziehungsweise Platzbereich abgegeben wurden und wie die jeweiligen Nutzer diesen Platz beziehungsweise Platzbereich bewertet haben.

Besonders vorteilhaft ist eine Weiterbildung, gemäß der aus mehreren Bewertungen für den Platz und/oder Platzbereich eine statistisch ermittelte Bewertungsgröße ermittelt wird. Diese kann beispielsweise durch Mittelwertbildung, quadratische Mittelwertbildung oder dergleichen gebildet sein. Die hierdurch ermittelte Bewertungsgröße vereinfacht es dem Nutzer, zu erkennen, welchen Plätzen beziehungsweise Platzbereichen eine besonders hochwertige Qualität zugewiesen wurde. Dazu können natürlich auch unterschiedliche Qualitätsmerkmale zur Bewertung herangezogen werden. So kann beispielsweise vorgesehen sein, dass eine Qualität hinsichtlich der Sicht und der Akustik gemeinsam für die Bewertungsgröße herangezogen werden. Natürlich können diese bedarfsgemäß unterschiedliche Gewichtungen aufweisen. So kann beispielsweise eine visuelle Bewertung für einen Sitzplatz eines Konzerts in der Regel von geringerer Gewichtung als eine akustische sein. Umgekehrt kann dies beispielsweise bei einem Schauspielhaus, einem Theater oder dergleichen sein. Dort spielt die Sicht eine erheblich größere Rolle. Eventabhängige Vorgänge wie zum Beispiel Bestuhlung etc. können berücksichtigt werden.

Vorteilhaft wird vorgeschlagen, dass die Bewertungsgröße abrufbar gespeichert wird. So kann vorgesehen sein, dass der Nutzer neben einer einzelnen Bewertung auch die Bewertungsgröße abrufen kann. Natürlich kann vorgesehen sein, dass nur die Bewertungsgröße abrufbar ist. Weitere Informationen können zum Beispiel mittels einer Kostenpflicht abrufbar sein.

Gemäß einer Weiterbildung wird vorgeschlagen, dass die für die Ermittlung der Bewertungsgröße herangezogenen Bewertungen aus den verfügbaren Bewertungen ausgewählt werden. So kann vorgesehen sein, dass sehr stark unterschiedliche Bewertungen für die Ermittlung der Bewertungsgröße außer Betracht gelassen werden. Beispielsweise können Bewertungsgrößen außer Betracht gelassen werden, die eine Standardabweichung überschreiten. Das Verfahren kann weiter verbessert werden.

Nach einer weiteren Variante der Erfindung erhalten zeitlich jüngere Bewertungen bei der Ermittlung der Bewertungsgröße eine höhere Gewichtung als zeitlich ältere. Hierdurch kann die Aktualität der Bewertungsgröße verbessert werden. Ergeben sich beispielsweise durch Umbaumaßnahmen verursachte Veränderungen, so kann dies durch die jüngeren Bewertungen besser berücksichtigt werden. Dies spiegelt sich durch das höhere Gewicht in der Ermittlung der Bewertungsgröße wieder. Der Nutzer erhält deshalb eine vergleichsweise aktuell gehaltene Bewertung für den Platz beziehungsweise Platzbereich.

Darüber hinaus wird vorgeschlagen, dass die Bewertungsgröße für mehrere Qualitätsmerkmale ermittelt wird. So kann die Ermittlung der Bewertungsgröße neben Qualitätsmerkmalen für die Sicht und die Akustik auch ergonomische Qualitätsmerkmale aufweisen, die beispielsweise den Sitzkomfort, die Einstellbarkeit des Sitzes und dergleichen umfassen. Solche Merkmale können beispielsweise für ältere und/oder behinderte Menschen wichtig sein. Besonders vorteilhaft kann deshalb der Nutzer die Bewertungsgröße gemäß selbst auswählbarer Kriterien ermitteln lassen, so dass die Ermittlung einer nutzerspezifischen Bewertungsgröße erreicht werden kann. Dies kann beispielsweise dadurch erreicht werden, dass der Nutzer vor der Ermittlung der Bewertungsgröße die Qualitätsmerkmale angibt, die er für die Ermittlung der Bewertungsgröße hinzugezogen wünscht. Bei einer elektronischen Datenbank kann dies beispielsweise durch ein Auswahlmenü erfolgen, in dem der Nutzer die für die Ermittlung heranzuziehenden Qualitätsmerkmale auswählt. Er erhält dann beispielsweise eine Anzeige der Sitzplatzangebote gemäß seiner individuellen Bewertungsgröße.

Gemäß einem weiteren Vorschlag der Erfindung werden Bewertungen gelöscht. Auf diese Weise können fehlerhafte Bewertungen, nicht mehr aktuelle Bewertungen und dergleichen außer Betracht gelassen werden.

Darüber hinaus kann vorgesehen sein, dass die für die Ermittlung der Bewertungsgröße herangezogenen Bewertungen gelöscht werden. So wird eine Bewertung lediglich ein einziges Mal für eine Bewertungsgröße verwendet, wobei die zu ihrer Ermittlung herangezogenen einzelnen Bewertungen gelöscht werden. Dies erlaubt eine speicheroptimierte Ausgestaltung des erfindungsgemäßen Verfahrens. Natürlich kann auch die bisherige Bewertungsgröße in die Ermittlung einfließen.

Weiterhin kann vorgesehen sein, dass das Löschen von Bewertungen vor Erreichen einer Speicherzeit und/oder von einer Nutzungszeit abhängig ist. So kann jede Bewertung mit einer Verfallszeit versehen werden, nach deren Erreichen die Bewertung gelöscht und für eine weitere Ermittlung von Bewertungsgrößen nicht mehr zur Verfügung steht. Die Speicherzeit kann vorgebbar sein. Sie kann beispielsweise einen Monat, ein Quartal, ein Jahr oder dergleichen betragen.

Ferner kann das Löschen auch von der Nutzungszeit abhängig sein, so dass beispielsweise sehr alte Nutzungen des Sitzplatzes gelöscht werden. Hierdurch kann mittels des erfindungsgemäßen Verfahrens eine möglichst aktuelle Bewertung beziehungsweise Bewertungsgröße erreicht werden.

Gemäß einer weiteren vorteilhaften Ausgestaltung der Erfindung wird eine Bewertungsgröße benachbarter Plätze und/oder Platzbereiche aus der Bewertung für den Platz und/oder Platzbereich geschätzt. Die Erfindung macht sich den Sachverhalt zu Nutze, dass benachbarte Plätze beziehungsweise Platzbereiche in der Regel vergleichbare Qualitätsmerkmale aufweisen, wie der bewertete Platz beziehungsweise Platzbereich selbst. Die Bewertungsgröße kann jedoch mit einem Abschlag versehen sein, der der Tatsache Rechnung trägt, dass für den zu bewertenden Platz beziehungsweise Platzbereich keine eigene Bewertung zur Verfügung steht. Auf diese Weise wird erreicht, dass für einen vorgegebenen Veranstaltungsort beziehungsweise eine vorgegebene Kategorie für sämtliche Plätze beziehungsweise Platzbereiche eine Bewertung beziehungsweise die Ermittlung einer Bewertungsgröße erreicht werden kann. Natürlich kann auch vorgesehen sein, dass für die Ermittlung der Bewertungsgröße nicht nur bisher geschätzte Bewertungsgrößen des gegebenen Platzes beziehungsweise Platzbereichs selbst sondern auch die von benachbarten Plätzen beziehungsweise Platzbereichen herangezogen werden. Hierdurch kann eine Bewertungsgröße des Platzes beziehungsweise Platzbereiches erreicht werden, obwohl keine eigene Bewertung für den Platz beziehungsweise Platzbereich vorliegt.

Ferner wird vorgeschlagen, dass für die Bewertungsgröße eines Platzes und/oder Platzbereichs eine Bewertung eines benachbarten Platzes und/oder Platzbereichs berücksichtigt wird. Hierdurch kann eine Vergleichmäßigung eines Bewertungsgrößenunterschieds zwischen benachbarten Plätzen und/oder Platzbereichen erreicht werden. Dies ist vorteilhaft bei Bewertungsausreißern, die die Bewertungsgröße gegebenenfalls unangemessen beeinträchtigen können.

Nach einer weiteren Ausgestaltung der Erfindung wird eine Bewertungsgröße eines zwischen zwei bewerteten Plätzen und/oder Platzbereichen angeordneten Platzes und/oder Platzbereichs interpoliert. Diese Ausgestaltung erlaubt es, eine zuverlässige Bewertungsgröße des noch nicht bewerteten Platzes beziehungsweise Platzbereichs zu ermitteln. So kann bereits mit vergleichsweise wenigen Bewertungen eine zuverlässige Bewertungsgröße einer großen Gruppe von Plätzen beziehungsweise Platzbereichen erreicht werden. Zur Interpolation können mathematische Verfahren wie Regression, insbesondere lineare Regression, Spline-Interpolation und dergleichen herangezogen werden. Die Berechnungsverfahren können auch miteinander kombiniert werden beziehungsweise, um eine optimale Bewertungsgröße zu erhalten, entsprechend ausgewählt werden.

Besonders vorteilhaft wird die Bewertungsgröße in vorgebbaren Zeitabständen aktualisiert. So kann vorgesehen sein, dass die Bewertungsgröße im Minutentakt, im Stundentakt oder dergleichen aktualisiert wird. Natürlich können auch unregelmäßige Zeitabstände vorgesehen sein, die eine Aktualisierung der Bewertungsgröße nach sich ziehen. Sie kann beispielsweise von der Abgabe einer neuen Bewertung abhängig sein.

Gemäß einer weiteren Ausgestaltung wird vorgeschlagen, dass für die Bewertung veranstaltungsortbezogene Parameter berücksichtigt werden. Diese können beispielsweise baulicher Natur sein, durch Pfosten, Geräuschquellen und dergleichen Berücksichtigung finden. Die Qualität der Bewertung kann weiter verbessert werden. Natürlich können auch bühnentechnische Parameter berücksichtigt werden, wie beispielsweise Einsehbarkeit der Bühne, Anordnung von Beleuchtungs- oder akustischen Wiedergabequellen. So ist es zum Beispiel bei Musikveranstaltungen nicht immer wünschenswert, einen Platz vor einem Lautsprecher zu erhalten, weil die Lautstärke dort häufig als unangenehm hoch empfunden wird.

Es wird ferner vorgeschlagen, dass eine Rangfolgeliste für die Dienstleistungsangebote erstellt wird. Vorzugsweise ist die Rangfolgeliste auf- beziehungsweise absteigend hinsichtlich der verarbeiteten Bewertungen sortiert. Hierdurch kann eine einfache Vergleichbarkeit der Dienstleistungsangebote erreicht werden. Die Bewertungen können beispielsweise durch Noten, eine Anzahl von Zeichen wie Sterne, Farbabstufungen oder dergleichen dargestellt sein. Besonders vorteilhaft ist die Rangfolgeliste über Kommunikationsmittel abrufbar, wie zum Beispiel Internet, Mobilfunk oder dergleichen. Die Bewertungen werden zum Beispiel von Kunden abgegeben, die zwar einen Text einstellen können, vor allem aber eine "Wertzahl" abgeben, also eine Note in einem vorgegebenen Spektrum, Sterne oder dergleichen vergeben. Die Rechner können daraus automatisch ein Ranking ermitteln und darstellen beziehungsweise auf Anfrage angeben.

Weitere Vorteile und Merkmale sind der folgenden Beschreibung des Ausführungsbeispiels zu entnehmen. Das Ausführungsbeispiel dient lediglich der Erläuterung der Erfindung und soll diese nicht beschränken.

Es zeigen:
- Figur 1: eine schematische Darstellung eines Grundrisses eines Theaterraums,
- Figur 2: schematisch ein Blockschaltbild eines Systems zur Durchführung des erfindungsgemäßen Verfahrens und
- Figur 3: schematisch eine Eingabemaske für einen Nutzer zur Bewertung eines Sitzplatzes.

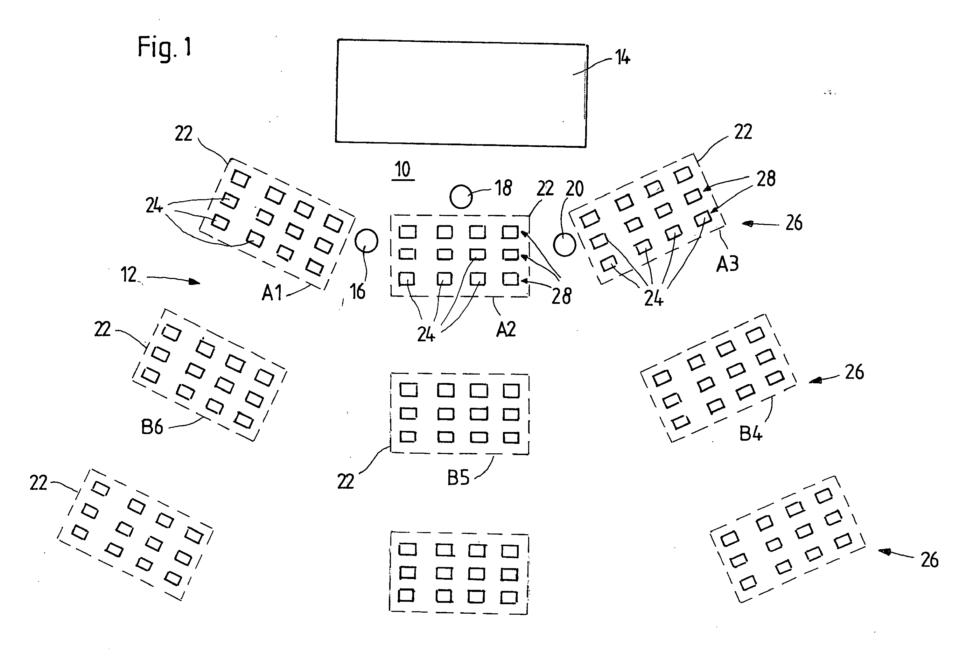

Figur 1 zeigt einen schematischen Grundriß eines Theaterraums 10, der Ränge 12 aufweist, die ringsegmentartig einer Bühne 14 gegenüber angeordnet sind. In den Rängen 12 sind Sitzplätze 24 angeordnet, die zu Blöcken 22 gruppiert sind. Zur späteren Unterscheidung der Blöcke sind die Blöcke 22 in der Figur 1 jeweils im rechten oberen Bereich mit einem Nummerierungsfähnchen versehen. Innerhalb eines jeden Blockes 22 sind die Sitzplätze 24 in Reihen 28 nebeneinander angeordnet, so dass ein Nutzer des Sitzplatzes 24 mit seinem Blickfeld in Richtung Bühne 14 ausgerichtet ist. Damit die Nutzer der Sitzplätze 24 hinterer Reihen 28 eine gute Sicht zur Bühne 14 erhalten, sind die einzelnen Blöcke 22 sowie die einzelnen Reihen 28 innerhalb der Blöcke 22 mit zunehmender Entfernung von der Bühne 14 gegenüber den vorhergehenden Blöcken bzw. Reihen erhöht angeordnet.

Aus bautechnischen Gründen sind im Bereich der Ränge 12 Säulen 16, 18, 20 angeordnet, die eine nicht dargestellte Decke des Theaterraums 10 stützen.

Jeder Block 22 ist einer Kategorie 26 zugeordnet, die in der vorliegenden Ausgestaltung durch einen Buchstaben der Buchstaben A, B, C gekennzeichnet ist. Vorliegend ist die Kategorie preisbestimmend für einen Sitz des jeweiligen Blockes 22.

In der vorliegenden Ausgestaltung ist vorgesehen, dass jedem Sitzplatz 24 eine eindeutige Sitzplatznummer zugeordnet ist. Durch die Angabe der Sitzplatznummer sind automatisch weitere Parameter wie die Reihe 28, die Kategorie 26 sowie der Block 22 bestimmt.

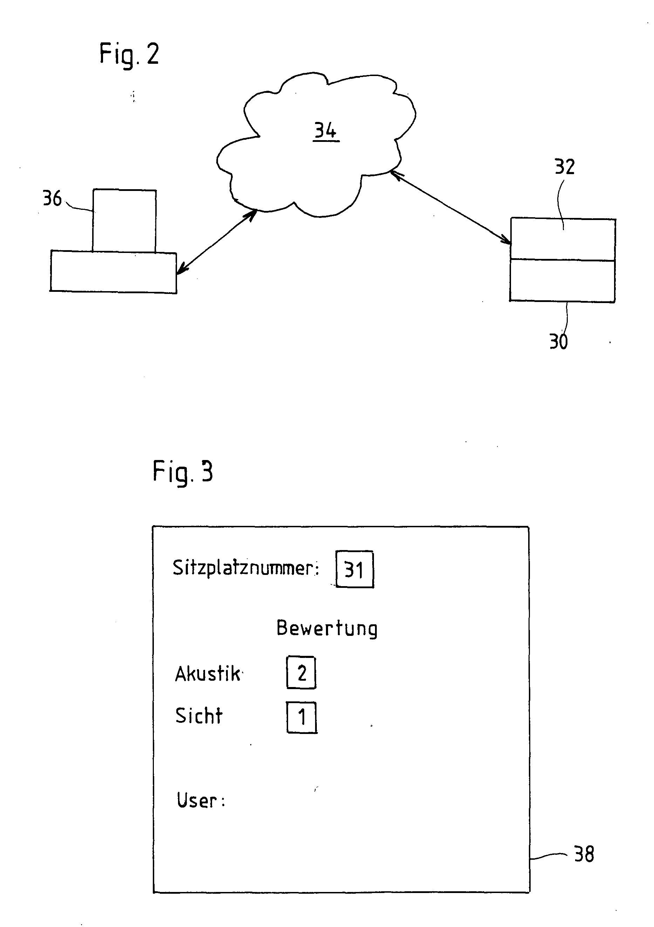

Figur 2 zeigt ein System zur Ausführung des erfindungsgemäßen Verfahrens. Die Qualitätsmerkmale für den Sitzplatz 24, die Bewertungsmaßstäbe für die einzelnen Qualitätsmerkmale sowie die Bewertung des Nutzers werden in einer Speichereinheit 30 gespeichert. Diese steht in kommunikationstechnischer Verbindung mit einer Rechnereinheit 32, die die Daten entsprechend aufarbeitet und Verarbeitet. Gegebenenfalls neu erzeugte Daten werden ebenfalls in der Speichereinheit 30 gespeichert.

Die Rechnereinheit 32 steht in Kommunikationsverbindung mit dem Internet 34, welches seinerseits in Kommunikationsverbindung mit einer Ein-/Ausgabeeinheit 36 steht. Über die Ein-/Ausgabeeinheit 36 kann ein Nutzer Bewertungen abgeben sowie auch eine Bewertung der Qualität eines Sitzplatzes abrufen.

Figur 3 zeigt eine Eingabemaske für die Bewertung eines Nutzers, die mittels der Eingabe-/Ausgabeeinheit 36 auf einem nicht näher dargestellten Bildschirm angezeigt wird. Mittels nicht näher bezeichneter Markierungsmittel kann der Nutzer seine Angaben hinsichtlich der Bewertung des Sitzplatzes 24 bezüglich der einzelnen Qualitätsmerkmale abgeben. In der vorliegenden Ausgestaltung ist vorgesehen, dass der Nutzer lediglich zu den Merkmalen Bewertungen abgibt, zu denen er Bewertungen abgeben möchte. Natürlich kann auch vorgesehen sein, dass eine Bewertung erst dann abgegeben werden kann, wenn sämtliche Qualitätsmerkmale vom Nutzer bewertet worden sind.

Ist die Maske 38 vom Nutzer bestimmungsgemäß ausgefüllt, so kann er durch eine Bestätigung, beispielsweise mittels einer Eingabetaste der Ein-/Ausgabeeinheit 36, die Daten über die Kommunikationsverbindung und das Internet 34 an die Rechnereinheit 32 übermitteln. Diese veranlaßt zunächst das Speichern der Daten in der Speichereinheit 30. In der vorliegenden Ausgestaltung ist vorgesehen, dass die Rechnereinheit 32 diesen Daten, die als Datensatz gespeichert werden, ein Speicherdatum hinzufügt.

Damit der Nutzer seine Bewertung abgeben kann, ist vorgesehen, dass er sich zunächst mittels bekannter Anmeldeverfahren am System anmeldet. Nun kann er die gewünschte Bewertung durch Aufrufen der Eingabemaske 38 abgeben. Neben den eingebbaren Bewertungen gibt der Nutzer den Zeitpunkt der Nutzung ein. Nachdem er seine Bewertung abgegeben hat, erfolgt eine automatische Abmeldung. Alternativ kann natürlich auch die Eingabe einer weiteren Bewertung vorgesehen sein. In diesem Fall ist vorgesehen, dass sich der Nutzer durch eine weitere Aktion selbst vom System abmeldet.

Zur Verbesserung der Datensicherheit kann vorgesehen sein, dass sich der Nutzer mit seiner Anmeldung am System identifizieren muß. Die Identifikation kann dem Datensatz zugeordnet in der Speichereinheit 30 gespeichert werden. Dies hat den Vorteil, dass bei einer eventuell vorgesehenen Korrekturmöglichkeit des Datensatzes durch den Nutzer die Zulässigkeit der Korrektur geprüft werden kann. Auf diese Weise kann verhindert werden, dass unberechtigte Dritte Bewertungen des Nutzers manipulieren können. Auch kann eine IP-Adressen-Überprüfung erfolgen.

Um eine Bewertung bezüglich eines Sitzplatzes abfragen zu können, kann der Nutzer im Rahmen einer Abfragemaske mittels der Ein-/Ausgabeeinheit 36 die für ihn den Sitzplatz 24 wichtigen Angaben eingeben und an die Rechnereinheit 32 übermitteln. Die Rechnereinheit 32 ermittelt dann nach einem vorgebbaren Verfahren die Bewertung für den angefragten Sitzplatz und übermittelt diese Daten über die Kommunikationsverbindung und das Internet 34 an die Eingabe-/Ausgabeeinheit 36, die diese auf dem Bildschirm anzeigt. Mit der Abfragemaske kann der Nutzer gewünschte Qualitätsmerkmale auswählen, für die er eine Bewertung wünscht. Auf diese Weise kann die Bewertung nutzerspezifisch ausgeführt werden. Die Rechnereinheit 32 beschränkt dann die Bewertung der Qualität des angefragten Sitzplatzes auf die vom Nutzer ausgewählten Qualitätsmerkmale. Natürlich kann auch vorgesehen sein, dass er bezüglich sämtlicher Qualitätsmerkmale eine Bewertung wünscht.

Die eigentliche Bewertung der Qualität des Sitzplatzes erfolgt durch die Rechnereinheit 32 unter Berücksichtigung der in der Speichereinheit 30 gespeicherten Daten.

Natürlich kann der Nutzer auch die Qualität anderer Sitzplätze eines Veranstaltungsorts abfragen. Die Anzeige kann hierbei in Form von Diagrammen erfolgen, bei denen beispielsweise eine Gesamtbewertung aller Sitzplätze 24 in Form eines Balkendiagramms mittels der Ein-/Ausgabeeinheit angezeigt werden können. Bevorzugt werden Saalpläne verwendet.

Um eine Qualitätsbewertung bezüglich eines Sitzplatzes durchzuführen, werden zunächst aus den bezüglich des angefragten Sitzplatzes 24 gespeicherten Bewertungen hinsichtlich jedes Qualitätsmerkmals die abgegebenen Bewertungen ermittelt. Hieraus wird zunächst ein qualitätsmerkmalbezogener Datensatz erzeugt. In einem weiteren Schritt erzeugt die Rechnereinheit 32 aus dem qualitätsmerkmalbezogenen Datensatz eine einzige Bewertungsgröße für den Sitzplatz, wobei vorliegend vorgesehen ist, die einzelnen Qualitätsmerkmale mit Gewichtungsfaktoren verknüpft lediglich aufzusummieren und das Ergebnis durch die Anzahl der berücksichtigten Qualitätsmerkmale zu dividieren. Es kann vorgesehen sein, dass die Gewichtungsfaktoren sowohl nutzerspezifisch als auch betreiberspezifisch vorgebbar sind. So ist vorliegend vorgesehen, dass bei einem Veranstaltungsort für Konzerte der Gewichtungsfaktor für das Qualitätsmerkmal Akustik 2 beträgt, wohingegen der Gewichtungsfaktor für das Qualitätsmerkmal Sicht lediglich 1 beträgt. Hierdurch wird der Tatsache Rechnung getragen, dass es bei einem Konzert stärker auf die Akustik als auf die Sicht ankommt.

Darüber hinaus ist in der Speichereinheit 30 ein schematischer Plan gemäß Figur 1 hinterlegt, der es erlaubt, bauliche Verhältnisse bei der Bewertung der Sitzplätze 24 zu berücksichtigen. Wie aus Figur 1 ersichtlich ist, sind innerhalb der Ränge 12 die Säulen 16, 18, 20 angeordnet, die aus konstruktiven Gründen vorgesehen sein müssen. Hieraus folgt, dass bestimmte Bereiche der Ränge 12, die von der Bühne 14 aus gesehen hinter den Säulen 16, 18, 20 angeordnet sind, eine Beschränkung hinsichtlich der Sicht nach sich ziehen. Dies betrifft unter anderem den hinteren rechten Bereich des Blocks 4, den mittleren Bereich des Blocks 5 sowie den hinteren linken Bereich des Blocks 6. Gerade wenn der Veranstaltungsort ein Theater ist, erweist sich die Anordnung der Säulen 16, 18, 20 als sehr hinderlich und führt zu Qualitätseinbußen. Dies kann durch das erfindungsgemäße Verfahren bei der Bewertung berücksichtigt werden. Vorliegend ist vorgesehen, dass diese Sichtbehinderung beim Qualitätsmerkmal für Sicht mit einem Abschlagsfaktor berücksichtigt wird. Dieser Faktor ist vom Abstand zu der sichtbehindernden Säule 16, 18, 20 sowie einer Sichtwinkelbeschränkung zur Bühne 14 abhängig. Ein besonders hoher Abschlag ist bei den mittleren Sitzen im Block 5 vorgesehen, weil die Säule 18 die Sicht auf den zentralen Bereich der Bühne 14 deutlich behindert. Die Sichtbehinderung nimmt jedoch mit der Entfernung zur Säule 18 ab, so dass der Faktor bei hinteren Reihen im Block 5 kleiner ausfällt als bei vorderen.

Liegt für einen vom Nutzer angefragten Sitzplatz keine Bewertung vor, so kann mittels der Rechnereinheit 32 durch Interpolation aus Bewertungen bezüglich benachbarter Sitze unter weiterer Berücksichtigung der vorgenannten Faktoren eine Bewertung interpoliert werden. Neben der Methode der linearen Regression eignet sich hierzu auch die Methode der Spline-Interpolation. Dabei werden möglichst viele Sitzplätze in Betracht gezogen. Die Interpolation kann reihenbezogen und/oder spaltenbezogen erfolgen. In der vorliegenden Ausgestaltung ist vorgesehen, dass die Rechnereinheit 32 aus den verfügbaren Bewertungen für die Sitzplätze eines Blockes eine Bewertung für sämtliche Sitzplätze unter Berücksichtigung der Interpolation erstellt. Diese wird dann als blockbezogener Datensatz in der Speichereinheit abrufbar für Nutzer gespeichert. Zusätzlich ist vorgesehen, dass durch Nutzer abgegebene Bewertungen mit einem Zeitfaktor versehen sind, dessen Wert in der vorliegenden Ausgestaltung zwischen 0 und 1 liegt. Eine junge Bewertung erhält den Faktor 1, wohingegen dieser Faktor jährlich um 0,1 reduziert wird. Nach 10 Jahren wird demnach die Bewertung gelöscht.

Vorteilhaft können beispielsweise Eintrittskarten für Veranstaltungen mit der Bewertungsgröße bedruckt werden.

Das in den Figuren dargestellte Ausführungsbeispiel dient lediglich der Erläuterung der Erfindung und ist für diese nicht beschränkend.

Die Erfindung sieht also, qualifizierende Informationen für Dienstleistungen, Produkte und sonstige Angebote abrufbar bereitzuhalten und zu diesem Zwecke zu erstellen. So wird beispielsweise den Käufern eines Produktes oder den Nutzern einer Dienstleistung anheim gestellt, im Internet in einer Art Tabelle das Produkt bzw. die Dienstleistung zu identifizieren und eine konkrete Bewertung abzugeben, also eine Zahl in einer Skala, eine Anzahl von Sternen oder beliebige vergleichbare Bewertungskriterien je nach Vorgabe durch den Betreiber. Die Rechneranlage kann dann automatisch diese Informationen sammeln und produkt-/dienstleistungsweise auswerten. Zukünftige Nutzer oder Kaufinteressenten können dann das Ranking abfragen und somit auf einfache Weise ein Indiz für die Werthaltigkeit erhalten oder kann unter vergleichbaren Produkten das jenige mit dem gewünschten Ranking auswählen. Zwar sind viele Systeme im Stand der Technik bekannt, wo Kunden oder Nutzer eine Stellungnahme beispielsweise zur Zuverlässigkeit von Lieferanten und zu Produkten oder dergleichen abgeben können, es findet jedoch keine ein Ranking herausarbeitende Analyse statt.

### Bezugszeichenliste

- 10: Theaterraum
- 12: Ränge
- 14: Bühne
- 16: Säule
- 18: Säule
- 20: Säule
- 22: Block
- 24: Sitzplatz
- 26: Kategorie
- 28: Reihe
- 30: Speichereinheit
- 32: Rechnereinheit
- 34: Internet
- 36: Eingabe-/Ausgabeeinheit
- 38: Eingabemaske

## Patentansprüche

1. Verfahren zur Ermittlung einer Vergleichbarkeit von Dienstleistungsangeboten bzw. Produkten, wobei einer Dienstleistung bzw. einem Produkt eine individualisierende Identifikation zugewiesen wird, ein Qualitätsmerkmal für die Dienstleistung sowie ein Bewertungsmaßstab hierfür festgelegt werden, von Nutzern der Dienstleistung bzw. dem Produkt bewertungsmaßstabsentsprechende Bewertungen für das Qualitätsmerkmal abgegeben und gesammelt werden, die Bewertungen verarbeitet werden und ein Ergebnis abrufbar gespeichert wird.

2. Verfahren nach Anspruch 1,
**dadurch gekennzeichnet,**
**dass** als Dienstleistung ein Platz und/oder ein Platzbereich eines insbesondere öffentlichen Veranstaltungsortes verwendet wird.

3. Verfahren nach Anspruch 1 oder 2,
**dadurch gekennzeichnet,**
**dass** die Bewertung veranstaltungsortsspezifisch gespeichert wird.

4. Verfahren nach einem der Ansprüche 1 bis 3,
**dadurch gekennzeichnet,**
**dass** die Bewertung kategoriebezogen gespeichert wird.

5. Verfahren nach einem der Ansprüche 1 bis 4,
**dadurch gekennzeichnet,**
**dass** mehrere für den Platz und/oder den Platzbereich abgegebene Bewertungen gespeichert werden.

6. Verfahren nach einem der Ansprüche 1 bis 5,
**dadurch gekennzeichnet,**
**dass** aus mehreren Bewertungen für den Platz und/oder den Platzbereich eine statistisch ermittelte Bewertungsgröße ermittelt wird.

7. Verfahren nach einem der Ansprüche 1 bis 6,
**dadurch gekennzeichnet,**
**dass** die Bewertungsgröße abrufbar gespeichert wird.

8. Verfahren nach einem der Ansprüche 1 bis 7,
**dadurch gekennzeichnet,**
**dass** die für die Ermittlung der Bewertungsgröße herangezogenen Bewertungen aus den verfügbaren Bewertungen ausgewählt werden.

9. Verfahren nach einem der Ansprüche 1 bis 8,
**dadurch gekennzeichnet,**
**dass** zeitlich jüngere Bewertungen bei der Ermittlung der Bewertungsgröße eine höhere Gewichtung als zeitlich ältere erhalten.

10. Verfahren nach einem der Ansprüche 1 bis 9,
**dadurch gekennzeichnet,**
**dass** die Bewertungsgröße für mehrere Qualitätsmerkmale ermittelt wird.

11. Verfahren nach einem der Ansprüche 1 bis 10,
**dadurch gekennzeichnet,**
**dass** Bewertungen gelöscht werden.

12. Verfahren nach einem der Ansprüche 1 bis 11,
**dadurch gekennzeichnet,**
**dass** die für die Ermittlung der Bewertungsgröße herangezogenen Bewertungen gelöscht werden.

13. Verfahren nach einem der Ansprüche 1 bis 12,
**dadurch gekennzeichnet,**
**dass** das Löschen von Bewertungen vom Erreichen einer Speicherzeit und/oder von einer Nutzungszeit abhängig ist.

14. Verfahren nach einem der Ansprüche 1 bis 13,
**dadurch gekennzeichnet,**
**dass** eine Bewertungsgröße benachbarter Plätze und/oder Platzbereiche aus der Bewertung für den Platz und/oder den Platzbereich geschätzt wird.

15. Verfahren nach einem der Ansprüche 1 bis 14,
**dadurch gekennzeichnet,**
**dass** für die Bewertungsgröße eines Platzes und/oder eines Platzbereichs eine Bewertung eines benachbarten Platzes und/oder Platzbereichs berücksichtigt wird.

16. Verfahren nach einem der Ansprüche 1 bis 15,
**dadurch gekennzeichnet,**
**dass** eine Bewertungsgröße eines zwischen zwei bewerteten Plätzen und/oder Platzbereichen angeordneten Platzes und/oder Platzbereichs interpoliert wird.

17. Verfahren nach einem der Ansprüche 1 bis 16,
**dadurch gekennzeichnet,**
**dass** die Bewertungsgröße in vorgebbaren Zeitabständen aktualisiert wird.

18. Verfahren nach einem der Ansprüche 1 bis 17,
**dadurch gekennzeichnet,**
**dass** für die Bewertungsgröße veranstaltungsortbezogene Parameter berücksichtigt werden.

19. Verfahren nach einem der Ansprüche 1 bis 18,
**dadurch gekennzeichnet,**
**dass** eine Rangfolgeliste für die Dienstleistungsangebote erstellt wird.
